# EUROPÄISCHE PATENTSCHRIFT

(11) **EP 1 859 986 B1**
(45) Veröffentlichungstag und Bekanntmachung des Hinweises auf die Patenterteilung: **25.11.2009**
(21) Anmeldenummer: 06010644.0
(22) Anmeldetag: 24.05.2006
(51) Int. Cl.: B60N 2/02, H01H 9/26, H01H 15/00

(54) **Schalteranordnung, insbesondere zur Verstellung eines Fahrzeugsitzes**
Switch assembly, particularly for adjustment of a vehicle seat
Ensemble interrupteur, particulièrement pour le réglage d'un siège de véhicule

(43) Veröffentlichungstag der Anmeldung: 28.11.2007
(73) Patentinhaber: Delphi Technologies, Inc., Troy, Michigan 48007 (US)
(72) Erfinder: Eisenmüller, Georg, 55487 Ellern (DE); Kessel, Heiko, 55559 Bretzenheim (DE)
(74) Vertreter: Denton, Michael John

(56) Entgegenhaltungen:
- FR-A1- 2 761 021
- US-A1- 4 695 682
- US-A1- 5 130 501
- US-A1- 5 442 149

## Beschreibung

Die Erfindung bezieht sich auf eine Schalteranordnung, insbesondere zur Verstellung eines Fahrzeugsitzes, mit zwei in einem Gehäuse gelagerten Schiebeschaltgliedern, denen in ihren Schaltpositionen jeweils Einzelschalter zugeordnet sind, wobei die Schiebeschaltglieder mittels eines Kopplungselementes derart miteinander verbunden sind, dass das eine Schiebeschaltglied in seiner Neutral-Schaltstellung gehalten ist, wenn das andere Schiebeschaltglied in eine seiner Schaltstellungen verschoben ist.

Eine derartige Schalteranordnung ist aus der US-A-5 130 501 bekannt, die als nächstliegender Stand der Technik angesehen wird.

Die DE 103 07 911 A1 offenbart einen Sitzverstellschalter für ein Kraftfahrzeug mit zwei Tasten, von denen die eine Taste in Längsrichtung und die andere Taste im Wesentlichen in Querrichtung betätigbar an einem Schaltergehäuse gelagert ist, wobei die Tasten über eine Kulisse mit einem Vierquadrantenschalter verbunden sind. Demnach ist für die beiden Tasten lediglich ein Schalter vorgesehen. Die Kulisse weist einen mit der ersten Taste verbundenen ersten Schieber und einen mit der zweiten Taste verbundenen zweiten Schieber auf. Der zweite Schieber ist in einem Querschlitz im ersten Schieber in Querrichtung verschiebbar gelagert. Zur Schaffung eines Freiheitsgrades für die zweite Taste ist in dem zweiten Schieber ein Längsschlitz eingelassen, in dem ein Zapfen der zweiten Taste in Längsrichtung verschiebbar gelagert ist. Somit wird beim Betätigen der ersten Taste zwar sowohl der erste als auch der zweite Schieber mitgenommen, diese Stellbewegung wird jedoch aufgrund des Längsschlitzes im zweiten Schieber nicht auf die zweite Taste übertragen.

Es ist Aufgabe der Erfindung, eine Schalteranordnung der eingangs genannten Art zu schaffen, mit der bei einem einfachen Aufbau eine Fehlbedienung ausgeschlossen ist und deren Schiebeschaltglieder spiegelbildlich montierbar sind.

Erfindungsgemäß wird die Aufgabe dadurch gelöst, dass das Kopplungselement zum einen in dem einen Schiebeschaltglied und zum anderen in dem Gehäuse drehbar gelagert ist und einen Nocken aufweist, der in eine im Wesentlichen kreuzförmige Nut des anderen Schiebeschaltgliedes eingreift, die eine Längsnut und zwei zueinander beabstandete Quernuten umfasst, wobei in Abhängigkeit von der Einbaulage des Schiebeschaltliedes die eine oder andere Quernut wirksam ist.

Die Schalteranordnung umfasst in ihrem Grundaufbau im Wesentlichen zwei konventionell gestaltete Schiebeschalter, deren Fehlbedienung jedoch durch das zwischen den beiden Schiebeschaltgliedern wirkende Kopplungselement ausgeschlossen ist. Das Kopplungselement stellt auch gegenüber der Anordnung von zwei konventionell gefertigten Schiebeschaltern in einem gemeinsamen Gehäuse das einzige zusätzliche Bauteil dar, weshalb die vorliegende Schalteranordnung bei einem geringen Platzbedarf relativ kostengünstig zu fertigen ist. Als Neutral-Schaltstellung ist die Mittenstellung des jeweiligen Schiebeschaltgliedes bezeichnet, aus der es in die eine oder andere Richtung in die jeweilige Schaltstellung verschoben wird. Durch die Ausbildung und Lagerung des Kopplungselementes steht der zum Verschieben eines der Schiebeschaltglieder erforderliche Freiheitsgrad nur dann zur Verfügung, wenn das andere Schaltglied seine Neutral-Schaltstellung einnimmt. Findet die Schalteranordnung beispielsweise als Sitzverstellschalter Verwendung, können die Schiebeschaltglieder aufgrund der beiden zueinander beabstandeten Quernuten durch entsprechende spiegelbildliche Montage auf beiden Seiten des Kraftfahrzeuges, also sowohl auf der Fahrer- als auch auf der Beifahrerseit, eingesetzt werden.

Zweckmäßigerweise weist das im Wesentlichen rechteckförmige Kopplungselement im Bereich seiner einen Stirnseite einen Zapfen auf, der in eine entsprechende Öffnung des zugeordneten Schiebeschaltgliedes eingreift. Vorzugsweise ist das Gehäuse mit einem in eine Bohrung des Kopplungselementes eingreifenden Bolzen versehen. Damit stehen zwei Lagerstellen für das Kopplungselement zur Verfügung, das sich bei einer Verschiebung des Schiebeschaltglieds mit der Öffnung um den gehäuseseitigen Bolzen dreht. Bevorzugt ist der Nocken des Kopplungselementes im Bereich der dem Zapfen gegenüberliegenden Stirnseite angeordnet.

Um den bei einer Verschiebung des den Zapfen lagernden Schiebeschaltgliedes eine Kreisbahn beschreibenden Nocken mit einem möglichst geringen Spiel zu führen, verlaufen die beiden Quernuten gegenläufig bogenförmig zueinander.

Zur einfachen Realisierung der in Abhängigkeit von den Schaltstellungen gegenseitigen Blockierung der Schiebeschaltglieder sind zweckmäßigerweise die beiden Schiebeschaltglieder parallel zueinander angeordnet und weisen senkrecht zueinander verlaufende Betätigungsrichtungen auf. Hierbei lässt sich das eine Schiebeschaltglied beispielsweise parallel zu einer Sitzfläche eines Fahrzeugsitzes verschieben, um dessen Sitzlehne nach vorn oder nach hinten zu bewegen, und das senkrecht dazu verschiebbare Schiebeschaltglied dient zur Verstellung der Höhe des Fahrzeugsitzes nach oben oder unten.

Bevorzugt geht mit einem Verschieben des die Öffnung aufweisenden Schiebeschaltglieds aus seiner Neutral-Schaltstellung in die eine oder andere Schaltstellung ein Verdrehen des Kopplungselementes um den gehäuseseitigen Bolzen einher, wodurch der Nocken in der Quernut einliegt und ein Verschieben des die Quernut aufweisenden Schiebeschaltgliedes aus seiner Neutral-Schaltstellung in die eine oder andere Schaltstellung verhindert ist. Weiterhin liegt bei einem Verschieben des die kreuzförmige Nut aufweisenden Schiebeschaltglieds aus seiner Neutral-Schaltstellung in die eine oder andere Schaltstellung der Nocken in der Längsnut ein und damit ist ein Verdrehen des Kopplungselementes sowie Verschieben des die Öffnung aufweisenden Schiebeschaltgliedes verhindert.

Zur einfachen Handhabung der Schalteranordnung ist jedes der Schiebeschaltglieder über ein zugeordnetes Betätigungselement tastend beaufschlagbar. Um auf zusätzliche Bauteile verzichten zu können, sind die Einzelschalter derart ausgebildet, dass sie eine Rückstellbewegung jedes Schiebeschaltgliedes aus der entsprechenden beaufschlagten Schaltstellung in die unbeaufschlagte Neutral-Schaltstellung bewirken.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

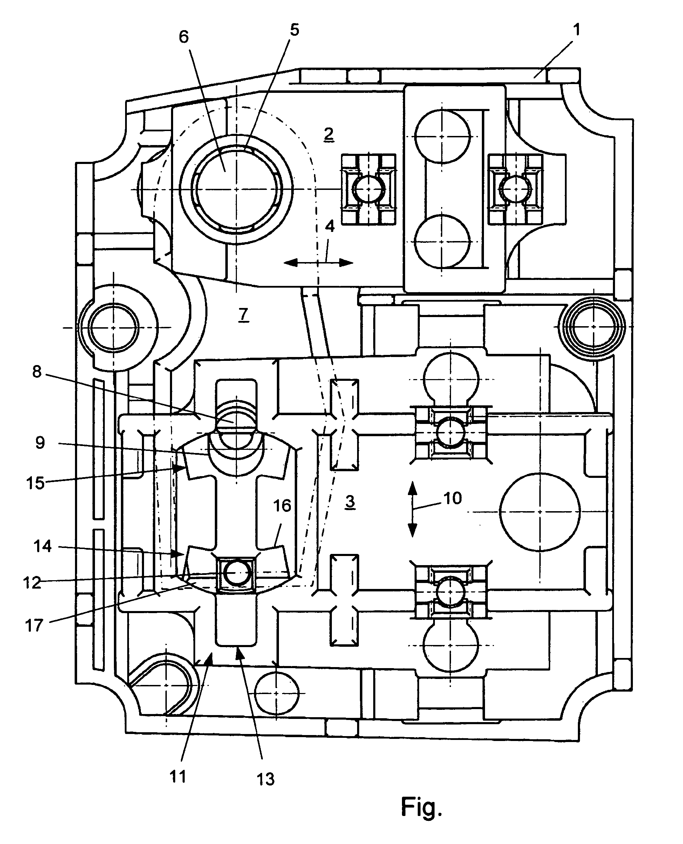

Die Erfindung wird im Folgenden anhand eines Ausführungsbeispieles unter Bezugnahme auf die zugehörige Zeichnung näher erläutert. Die einzige Fig. der Zeichnung zeigt eine Darstellung einer erfindungsgemäßen Schalteranordnung.

Die Schalteranordnung umfasst ein Gehäuse 1, in dem zwei Schiebeschaltglieder 2, 3 von Schiebeschaltern gelagert sind. Das eine Schiebeschaltglied 2 ist zur Beaufschlagung entsprechender Einzelschalter in Richtung des Doppelpfeils 4 aus seiner dargestellten Neutral-Schaltstellung in die eine oder andere Richtung in eine seiner Schaltstellungen verlagerbar und weist eine Öffnung 5 auf, in die ein Zapfen 6 eines im Wesentlichen rechteckförmigen Kopplungselementes 7 drehbar eingesetzt ist. Das Kopplungselement 7 ist im Weiteren über ein Langloch 9 auf einem gehäuseseitig angeformten Bolzen 8 drehbar gelagert. In das andere Schiebeschaltglied 3, das entsprechend der Richtung des Doppelpfeils 10 aus seiner dargestellten Neutral-Schaltstellung in die eine oder andere Richtung in eine seiner Schaltstellungen verschiebbar ist, ist eine kreuzförmige Nut 11 zur Aufnahme eines Nockens 12 des Kopplungselementes 7 eingelassen, die eine Längsnut 13 sowie zwei zueinander beabstandete und gegenläufig bogenförmige Quernuten 14, 15 umfasst.

Wird das obere Schiebeschaltglied 2 nach links verschoben, dann erfolgt eine Verdrehung des Kopplungselementes 7 und dessen Nocken 12 liegt in dem rechten Abschnitt 16 der unteren Quernut 14 ein, worauf eine Verschiebung des unteren Schiebeschaltgliedes 3 in eine seiner Schaltstellungen verhindert ist. Bei einer Verschiebung des oberen Schiebeschaltgliedes 2 nach rechts kommt der Nocken 12 in Eingriff mit dem linken Abschnitt 17 der unteren Quernut 14 und die Verlagerung des unteren Schiebeschaltgliedes 3 ist ebenfalls verhindert.

Bei einem Verschieben des unteren Schiebeschaltgliedes 3 in eine seiner Schaltstellungen liegt der Nocken 12 des Kopplungselementes 7 in der Längsnut 13 ein und eine Verlagerung des oberen Schiebeschaltgliedes 2 in eine seiner Schaltstellungen ist verhindert.

## Patentansprüche

1. Schalteranordnung, insbesondere zur Verstellung eines Fahrzeugsitzes, mit zwei in einem Gehäuse (1) gelagerten Schiebeschaltgliedern (2, 3), denen in ihren Schaltpositionen jeweils Einzelschalter zugeordnet sind, wobei die Schiebeschaltglieder (2, 3) mittels eines Kopplungselementes (7) derart miteinander verbunden sind, dass das eine Schiebeschaltglied (2 oder 3) in seiner Neutral-Schaltstellung gehalten ist, wenn das andere Schiebeschaltglied (2 oder 3) in eine seiner Schaltstellungen verschoben ist, **dadurch gekennzeichnet, dass** das Kopplungselement (7) zum einen in dem einen Schiebeschaltglied (2) und zum anderen in dem Gehäuse (1) drehbar gelagert ist und einen Nocken (12) aufweist, der in eine im Wesentlichen kreuzförmige Nut (11) des anderen Schiebeschaltgliedes (3) eingreift, die eine Längsnut (13) und zwei zueinander beabstandete Quernuten (14, 15) umfasst, wobei in Abhängigkeit von der Einbaulage des Schiebeschaltliedes (3) die eine oder andere Quernut (14 oder 15) wirksam ist.

2. Schalteranordnung nach Anspruch 1, **dadurch gekennzeichnet, dass** das im Wesentlichen rechteckförmige Kopplungselement (7) im Bereich seiner einen Stirnseite einen Zapfen (6) aufweist, der in eine entsprechende Öffnung (5) des zugeordneten Schiebeschaltgliedes (2) eingreift.

3. Schalteranordnung nach Anspruch 1 oder 2, **dadurch gekennzeichnet, dass** das Gehäuse (1) mit einem in eine langlochförmige Bohrung (9) des Kopplungselementes (7) eingreifenden Bolzen (8) versehen ist.

4. Schalteranordnung nach einem der Ansprüche 1 bis 3, **dadurch gekennzeichnet, dass** der Nocken (12) des Kopplungselementes (7) im Bereich der dem Zapfen (6) gegenüberliegenden Stirnseite angeordnet ist.

5. Schalteranordnung nach Anspruch 1, **dadurch gekennzeichnet, dass** die beiden Quernuten (14, 15) gegenläufig bogenförmig zueinander verlaufen.

6. Schalteranordnung nach einem der Ansprüche 1 bis 5, **dadurch gekennzeichnet, dass** die beiden Schiebeschaltglieder (2, 3) parallel zueinander angeordnet sind und senkrecht zueinander verlaufende Betätigungsrichtungen aufweisen.

7. Schalteranordnung nach einem der Ansprüche 1 bis 6, **dadurch gekennzeichnet, dass** mit einem Verschieben des die Öffnung (5) aufweisenden Schiebeschaltgliedes (2) aus seiner Neutral-Schaltstellung in die eine oder andere Schaltstellung ein Verdrehen des Kopplungselementes (7) um den gehäuseseitigen Bolzen (8) einhergeht, wodurch der Nocken (12) in der Quernut (14 oder 15) einliegt und ein Verschieben des die Quernut (14 oder 15) aufweisenden Schiebeschaltgliedes (3) aus seiner Neutral-Schaltstellung in die eine oder andere Schaltstellung verhindert ist.

8. Schalteranordnung nach einem der Ansprüche 1 bis 7, **dadurch gekennzeichnet, dass** bei einem Verschieben des die kreuzförmige Nut (11) aufweisenden Schiebeschaltgliedes (3) aus seiner Neutral-Schaltstellung in die eine oder andere Schaltstellung der Nocken (12) in der Längsnut (13) einliegt und damit ein Verdrehen des Kopplungselementes (7) sowie Verschieben des die Öffnung (5) aufweisenden Schiebeschaltgliedes (2) verhindert ist.

9. Schalteranordnung nach einem der Ansprüche 1 bis 8, **dadurch gekennzeichnet, dass** jedes der Schiebeschaltglieder (2, 3) über ein zugeordnetes Betätigungselement tastend beaufschlagbar ist.

10. Schalteranordnung nach einem der Ansprüche 1 bis 9, **dadurch gekennzeichnet, dass** die Einzelschalter derart ausgebildet sind, dass sie eine Rückstellbewegung jedes Schiebeschaltgliedes (2, 3) aus der entsprechenden beaufschlagten Schaltstellung in die unbeaufschlagte Neutral-Schaltstellung bewirken.

## Claims

1. Switch assembly, in particular for adjustment of a vehicle seat, with two sliding switch elements (2, 3) supported in a housing (1), having associated separate switches in their switching positions, respectively, the sliding switch elements (2, 3) being connected by means of a coupling element (7) such that the one sliding switch element (2 or 3) is maintained in its neutral switching position if the other sliding switch element (2 or 3) is shifted into one of its switching positions, **characterized in that** the coupling element (7) is rotably supported both in the one sliding switch element (2) and in the housing (1) and comprising a cam (12) engaged into a substantially crosswise groove (11) of the other sliding switch element (3) having a longitudinal groove (13) and two transverse grooves (14, 15) spaced in regard to each other, wherein the one or the other transverse groove (14 or 15) is effective depending on the installation position of the sliding switch element (3).

2. Switch assembly according to claim 1, **characterized in that** the essentially rectangular coupling element (7) comprises a pin (6) in the area of its one front side, engaged into a respective opening (5) of the associated sliding switch element (2).

3. Switch assembly according to claim 1 or 2, **characterized in that** the housing (1) is provided with a bolt (8) engaging into an elongated hole-shaped bore (9) of the coupling element (7).

4. Switch assembly according to one of the claims 1 to 3, **characterized in that** the cam (12) of the coupling element (7) is arranged in the area of the front side opposite the pin (6).

5. Switch assembly according to claim 1, **characterized in that** the two transverse grooves (14, 15) are arranged curved in opposite directions to each other.

6. Switch assembly according to one of the claims 1 to 5, **characterized in that** the two sliding switch elements (2, 3) are arranged parallel to each other and comprise operation directions vertical to each other.

7. Switch assembly according to one of the claims 1 to 6, **characterized in that** shifting of the sliding switch element (2) comprising the opening (5) from its neutral switching position into the one or other switching position involves a rotation of the coupling element (7) around the bolt (8) on the housing-side, whereby the cam (12) is placed into the transverse groove (14 or 15) and shifting the sliding switch element (3) comprising the transverse groove (14 or 15) from its neutral switching position into one or other switching position is prevented.

8. Switch assembly according to one of the claims 1 to 7, **characterized in that** shifting the sliding switch element (3) comprising the crosswise groove (11) from its neutral switching position in the one or other switching position the cam (12) is placed into the longitudinal groove (13) and thus a rotation of the coupling element (7) as well as shifting of the sliding switch element (2) having the opening (5) is prevented.

9. Switch assembly according to one of the claims 1 to 8, **characterized in that** each of the sliding switch elements (2, 3) can be actuated upon with an associated actuator element.

10. Switch assembly according to one of the claims 1 to 9, **characterized in that** the separate switches are configured such that they cause a reset movement of each sliding switch element (2, 3) from the corresponding actuated upon switching position into the non-actuated upon neutral switching position.

## Revendications

1. Agencement de commutateur, en particulier pour le réglage d'un siège de véhicule, comprenant deux éléments commutateurs coulissants (2, 3) agencés dans un boîtier (1), auquel sont associés des commutateurs individuels respectifs dans leur position de commutation, les éléments commutateurs coulissants (2, 3) étant reliés l'un à l'autre au moyen d'un élément d'accouplement (7) de telle manière que l'un des éléments commutateurs coulissants (2 ou 3) est maintenu dans sa position de commutation neutre, quand l'autre élément commutateur coulissant (2 ou 3) est déplacé jusque dans l'une de ses positions de commutation, **caractérisé en ce que** l'élément d'accouplement (7) est monté en rotation d'une part dans l'un des éléments commutateurs coulissants (2) et d'autre part dans le boîtier (1) et comporte une came (12) qui s'engage dans une gorge (11) sensiblement en forme de croix dans l'autre élément commutateur coulissant (3), cette gorge comprenant une gorge longitudinale (13) et deux gorges transversales (14, 15) à distance l'une de l'autre, et en fonction de la position de montage de l'élément commutateur coulissant (3) l'une ou l'autre gorge transversale (14 ou 15) est active.

2. Agencement de commutateur selon la revendication 1, **caractérisé en ce que** l'élément d'accouplement (7) sensiblement de forme rectangulaire comprend un tenon (6) dans la région de l'une de ses faces frontales, celui-ci s'engageant dans une ouverture correspondante (5) de l'élément commutateur coulissant (2) associé.

3. Agencement de commutateur selon la revendication 1 ou 2, **caractérisé en ce que** le boîtier (1) est pourvu d'un goujon (8) qui s'engage dans un perçage (9) en forme de trou oblong (9) de l'élément d'accouplement (7).

4. Agencement de commutateur selon l'une des revendications 1 à 3, **caractérisé en ce que** la came (12) de l'élément d'accouplement (7) est agencée dans la région de la face frontale opposée au tenon (6).

5. Agencement de commutateur selon la revendication 1, **caractérisé en ce que** les deux gorges transversales (14, 15) s'étendent l'une vers l'autre en forme d'arc et en sens opposés.

6. Agencement de commutateur selon l'une des revendications 1 à 5, **caractérisé en ce que** les deux éléments commutateurs coulissants (2, 3) sont agencés parallèlement l'un à l'autre et présentent des directions d'actionnement perpendiculaires l'une à l'autre.

7. Agencement de commutateur selon l'une des revendications 1 à 6, **caractérisé en ce qu'**une translation de l'élément commutateur coulissant (2) qui présente l'ouverture (5), partant de sa position de commutation neutre vers l'une ou l'autre position de commutation se traduit par une rotation de l'élément d'accouplement (7) autour du goujon (8) côté boîtier, grâce à quoi la came (12) se place dans la gorge transversale (14 ou 15) et un déplacement de l'élément commutateur coulissant (3) qui présente la gorge transversale (14 ou 15) partant de sa position de commutation neutre vers l'une ou l'autre position de commutation est empêché.

8. Agencement de commutateur selon l'une des revendications 1 à 7, **caractérisé en ce que** lors d'une translation de l'élément commutateur coulissant (3) qui présente la gorge en forme de croix (11), partant de sa position de commutation neutre vers l'une ou l'autre position de commutation, la came (12) se place dans la gorge longitudinale (13) et ainsi une rotation de l'élément d'accouplement (7) ainsi qu'une translation de l'élément commutateur coulissant (2) qui présente l'ouverture (5) sont empêchées.

9. Agencement de commutateur selon l'une des revendications 1 à 8, **caractérisé en ce que** chacun des éléments commutateurs coulissants (2, 3) est susceptible d'être sollicité par contact via un élément d'actionnement associé.

10. Agencement de commutateur selon l'une des revendications 1 à 9, **caractérisé en ce que** les commutateurs individuels sont réalisés de telle manière qu'ils entraînent un mouvement de rappel de chaque élément commutateur coulissant (2, 3) depuis la position de commutation sollicitée correspondante vers la position de commutation neutre non sollicitée.
